# EUROPÄISCHE PATENTANMELDUNG

(11) **EP 2 497 754 A1**
(43) Veröffentlichungstag der Anmeldung: **12.09.2012**
(21) Anmeldenummer: 12157069.1
(22) Anmeldetag: 27.02.2012
(51) Int. Cl.: C02F 3/08

(54) **Filtervorrichtung und Filterkartusche**

(30) Priorität: 09.03.2011 AT 3152011
(71) Anmelder: Wesner, Wolfgang, 1020 Wien (AT); Kurzmann, Heimo, 5302 Henndorf (AT)
(72) Erfinder: Wesner, Wolfgang, 1020 Wien (AT); Kurzmann, Heimo, 5302 Henndorf (AT)
(74) Vertreter: Vinazzer, Edith

(57) **Zusammenfassung**

Die Erfindung betrifft eine Filtervorrichtung, insbesondere zur biologischen Aufbereitung von Badewasser aus Schwimmteichen, Schwimmbecken und dergleichen, mit einem feststehenden Behälter (1), in welchem auswechselbare Filterkartuschen (4), die ein zur Bildung von Biofilm geeignetes Filtermedium enthalten, positioniert sind und von dem zu reinigenden Wasser durchströmt werden.

Die Filterkartuschen (4) bestehen aus einem Material, welches eine geringere Dichte als Wasser aufweist, und sind derart ausgeführt, dass sie im mit Filtermedium gefüllten Zustand im Behälter (1) schwimmend positioniert sind.

## Beschreibung

Die Erfindung betrifft eine Filtervorrichtung, insbesondere zur biologischen Aufbereitung von Badewasser aus Schwimmteichen, Schwimmbecken und dergleichen, mit einem feststehenden Behälter, in welchem auswechselbare Filterkartuschen, die ein zur Bildung von Biofilm geeignetes Filtermedium enthalten, positioniert sind und von dem zu reinigenden Wasser durchströmt werden. Die Erfindung betrifft ferner eine Filterkartusche für eine Filtervorrichtung, zur biologischen Aufbereitung von Badewasser aus Schwimmteichen, Schwimmbecken und dergleichen, welche Kartusche mit einem Filtermedium befüllt und von Wasser durchströmbar ist.

Aus der DE 196 10 172 A1 ist ein Wasseraufbereitungsgerät zum Aufbereiten von Trinkwasser und Leitungswasser bekannt, welches aus einem Gehäuse mit Deckel, Mantel und Boden, einem Wasserein- und Wasserauslauf und Filtermedien, die in übereinander angeordneten Filterkartuschen enthalten sind, besteht. Die Filterkartuschen sind auswechselbar und jeweils mit einer Gummidichtung gegenüber dem Gehäuse abgedichtet. Zwischen den einzelnen Kartuschen und dem Filtergehäuse ist ein Druckausgleich erforderlich. Dazu sind Öffnungen im Kartuschengehäuse vorgesehen, durch die überströmendes Wasser in den Bereich zwischen Kartuschen und Filtergehäuse, der nicht gespült werden kann, gelangt. Um einem Aufkeimen von Bakterien entgegenzuwirken, wird im Raum zwischen Kartusche und Filtergehäuse eine Vorrichtung vorgesehen, die Salz in Tabletten- oder Soleform enthält, das in Reaktion mit dem überströmenden Wasser eine Salzlösung ergibt, die das Aufkeimen von Bakterien verhindert und das Wasser konserviert.

Bei der Aufbereitung von Badewasser aus Schwimmteichen, Schwimmbecken und dergleichen ist die Anzucht von Biofilm auf einem Filtermedium, welcher durch seine biologische Aktivität dem Badewasser Nährstoffe entzieht, eine bereits bewährte Technologie und eine Alternative zur Chlordesinfektion bei üblichen Swimmingpools. Der gebildete Biofilm entzieht durch sein Wachstum dem Wasser Nährstoffe, die sich durch die Nutzung des Badegewässers, durch Oberflächeneinträge und dergleichen, ansammeln und zu Algenbildung führen würden. Voraussetzung für die Anzucht von Biofilm ist die gleichmäßige Anströmung einer möglichst großen Oberfläche eines Trägermaterials. Je kleiner die Körnungen oder Fasern der Trägermaterialien, auf welchen sich der Biofilm bildet, sind, desto größer ist die Filteroberfläche pro Volumeneinheit. Größere Fläche bedeutet schnelleren Biofilmaufbau und dies wiederum einen besseren Nährstoffentzug. Optimal ist daher ein möglichst feines Trägermaterial. Je feiner das Trägermaterial jedoch ist, desto leichter kommt es durch den Betrieb und den damit verbundenen Aufbau von Biofilm zu ungleichmäßigen Durchströmungen. Die nicht mehr ausreichend angeströmten Bereiche werden anaerob und setzen die in Biomasse gebundenen Nährstoffe wieder frei. Daher wird nach dem Stand der Technik vorwiegend gröberes Filtermaterial, wie Kies oder Steinbruch mit einer Körnung von 16 mm bis 32 mm oder größer eingesetzt, wodurch der Biofilmaufbau langsamer erfolgt, das Filtermaterial aber über einen längeren Zeitraum gleichmäßig durchströmt werden kann.

Es besteht der Wunsch nach einer besseren Filterleistung durch Verwendung von feinen Filtermaterialien. Diese feinen Filtermaterialien, wie beispielsweise Steinwolle, Sand, feiner Bruch, Blähton, Zeolith und dergleichen bzw. Mischungen dieser Materialien lassen sich jedoch nur so lange verwenden, als eine gleichmäßige Anströmung ihrer Oberfläche gewährleistet ist. Filtereinheiten mit feinem Filtermaterial haben daher eine begrenzte Nutzungsdauer bei der Badewasseraufbereitung und sollten regelmäßig getauscht werden.

Der Erfindung liegt somit die Aufgabe zugrunde, eine Filtervorrichtung und eine Filterkartusche der eingangs genannten Art derart auszuführen, dass feines Filtermaterial für eine hohe Filterleistung und definierte Reinigungskapazität verwendet werden kann und ein Austausch des Filtermaterials auf einfache und zweckmäßige Weise möglich ist.

Was die Filtervorrichtung betrifft wird die gestellte Aufgabe erfindungsgemäß dadurch gelöst, dass die Filterkartuschen aus einem Material bestehen, welches eine geringere Dichte als Wasser aufweist, und derart ausgeführt sind, dass sie im mit Filtermedium gefüllten Zustand im Behälter schwimmend positioniert sind.

Insbesondere bestehen gemäß der Erfindung ausgeführte Filterkartuschen aus einem wasserbeständigen, geschlossenzelligen Hartschaum. In Frage kommen vor allem EPS, EPP, EPE, PP-E,PE-Schaum, PVC-E, PS-E, PET-Schaum, Polyurethanschaum (PUR), NBR, Phenoplast-Schaum und Schaum aus diversen Biopolymeren. Gemäß einer bevorzugten Ausführung sind die Filterkartuschen aus zwei miteinander verbundenen Halbschalen zusammengesetzt, welche gemeinsam den das Filtermedium aufnehmenden Raum umschließen.

In einer erfindungsgemäß ausgeführten Filtervorrichtung befinden sich daher schwimmende Filterkartuschen, in welchen sich auch feine Filtermaterialien befinden können, die durch die gleichmäßige und konstante Anströmung mit Badewasser schnell Biofilm an ihren Oberflächen bilden. Die schwimmenden Filterkartuschen sind auf einfache Weise austauschbar. Durch simples Anpassen des Wasserstandes im Behälter lässt sich jede Filterkartusche leicht aus dem Behälter heben.

Wie bereits erwähnt, weisen die Filterkartuschen vor allem den Vorteil auf, dass sie auch sehr feine Filtermaterialien enthalten können. Gemäß einer bevorzugten Ausführungsform der Erfindung kommen als Filtermedium vorzugsweise Steinwolle, Sand, Kies, diverse Kunststoffkörper, Schwämme, Zeolithbruch, Eisenoxid und dergleichen in Frage.

Im Behälter sind ferner mehrere, gleich ausgeführte Filterkartuschen übereinander gestapelt. Auf besonders einfache Weise können die schwimmenden Filterkartuschen in einem definierten Abstand zur Behälterinnenwand positioniert sein, indem sie mittels mittiger Öffnungen auf einen Rohrabschnitt eines Rohres, welches zur Ableitung des gefilterten Wassers vorgesehen ist, aufgesetzt sind.

Besonders vorteilhaft ist es, wenn der Behälter mit einem Deckel verschlossen wird, welcher vom Behälterinneren abdichtet. Die schwimmenden Filterkartuschen übernehmen dabei gleichzeitig die Aufgabe, den Deckel abdichtend gegen die Behälteröffnung zu drücken.

Weitere Merkmale, Vorteile und Einzelheiten der Erfindung werden nun anhand der Zeichnung, die ein Ausführungsbeispiel darstellt, näher beschrieben. Dabei zeigen,
Fig. 1 eine schematische Gesamtansicht der Filtervorrichtung, eingebunden in einen Wasserkreislauf, teilweise im vertikalen Schnitt,
Fig. 2 eine Draufsicht auf die mit einem Deckel verschlossene Filtervorrichtung, Fig. 2a eine Seitenansicht des Deckels,
Fig. 3 eine Schrägansicht einer Filterkartusche von oben und
Fig. 4 und 5 Ansichten einer Halbschale der Filterkartusche.

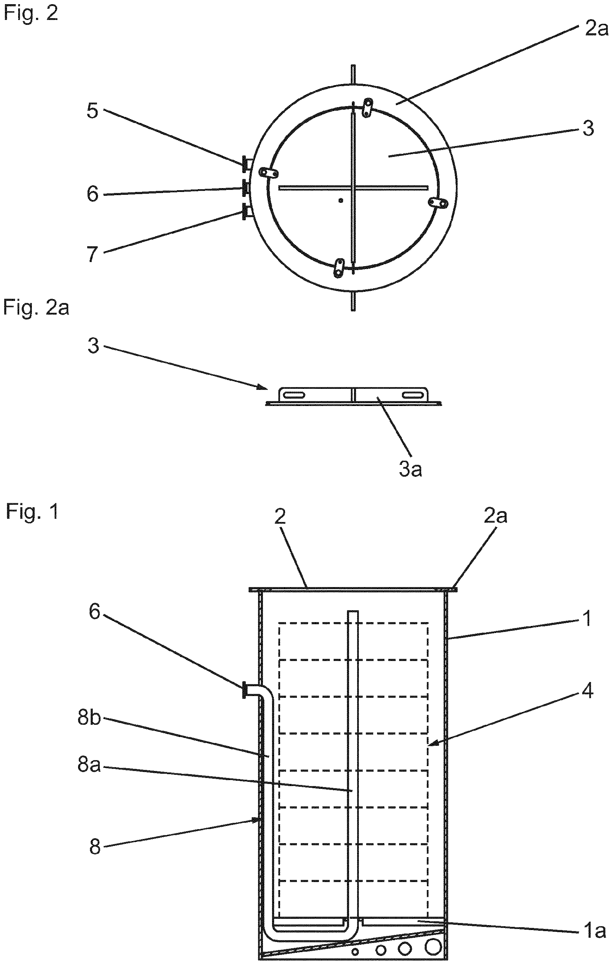

Wie Fig. 1 in Verbindung mit Fig. 2 und Fig. 2a zeigt, weist die Filtervorrichtung einen insbesondere zylindrischen Behälter 1 auf, welcher vorzugsweise aus Kunststoff besteht, wobei vor allem stabile, UV-beständige und haltbare Kunststoffe in Frage kommen. Dabei können bevorzugt ökologisch unbedenkliche Kunststoffe, wie z.B. Polypropylen oder Polyethylen verwendet werden. Es sind jedoch auch andere Kunststoffe einsetzbar, beispielsweise PVC. Des Weiteren kann der Behälter 1 aus Beton, Edelstahl oder Holz bestehen. Der Behälter 1 weist eine von einem Rand 2a umlaufene Öffnung 2 an seiner Oberseite auf, welche mittels eines Deckels 3, welcher ein Griffelement 3a aufweist, verschließbar ist. Gemäß einer bevorzugten Ausführungsform der Erfindung ist der Deckel 3 als ovaler Druckverschluss ausgeführt, welcher von innen schließt und, wie noch beschrieben wird, von im Behälter 1 positionierten Filterkartuschen 4 bei mit Wasser befülltem Behälter 1 gegen den Rand des Behälters 1 gedrückt wird. Wie Fig. 1 und Fig. 2 zeigen, ist die Behälterwand mit einer Anzahl von Anschlüssen 5, 6, 7 versehen. Über den Anschluss 5 kann der Behälter 1 entleert werden, wobei vom Anschluss 5 im Inneren des Behälters 1 nahe der Innenwand ein nicht gezeigtes Rohr bis zum Behälterboden reicht. Das zu filternde Badewasser gelangt über den Anschluss 7 in den Behälter 1 mittels einer nicht gezeigten Pumpe. Das gefilterte Wasser verlässt über den Anschluss 6 den Behälter 1. Der Anschluss 6 ist mit einem Ableitrohr 8 verbunden, welches im Behälter 1 U-förmig verläuft und einen entlang der Innenwand verlaufenden Rohrabschnitt 8b und einen entlang der zentralen Achse des Behälters 1 verlaufenden Rohrabschnitt 8a aufweist. Der Rohrabschnitt 8a entnimmt oberhalb der Filterkartuschen 4 das gefilterte Wasser, welches dem Schwimmteich, Schwimmbecken und dergleichen, gegebenenfalls nach dem Passieren einer oder mehrerer Pflanzzone(n), rückgeführt wird.

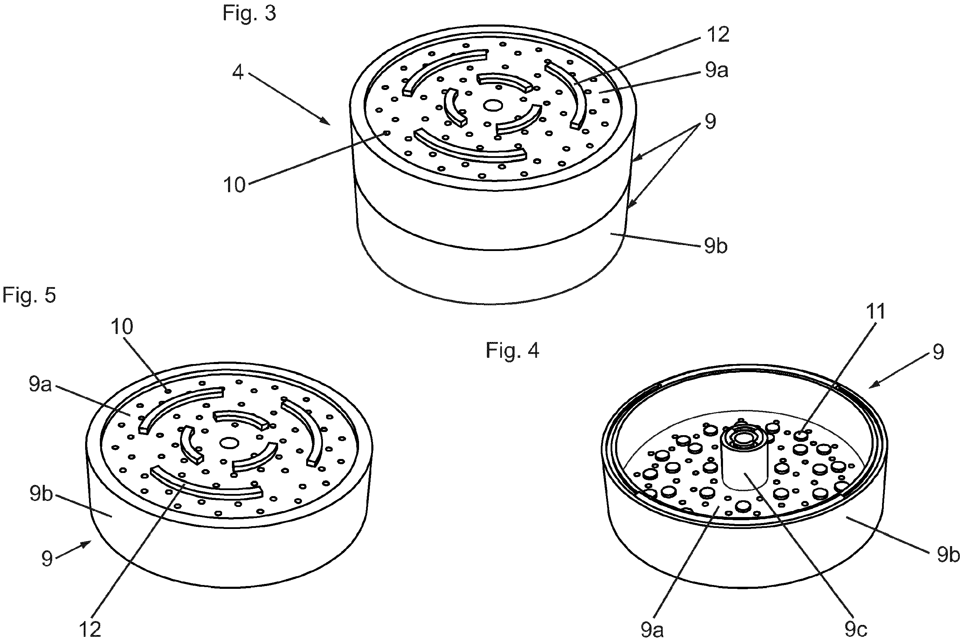

In den Behälter 1 kann eine Anzahl von Filterkartuschen 4, insbesondere bis zu sechs Filterkartuschen 4, welche gleich ausgeführt sind, eingesetzt werden, wobei die unterste Kartusche 4, wenn der Behälter 1 entleert ist, auf im Behälterinneren vorgesehenen Stützelementen 1a (Stege, Rost) aufliegt. Wie es Fig. 3 bis Fig. 6 zeigen ist jede Filterkartusche 4 aus zwei gleichen, flachzylindrischen Halbschalen 9 zusammengesetzt. Die Filterkartuschen 4 bestehen aus einem wasserbeständigen, geschlossenzelligen Hartschaum und sind derart ausgeführt, dass sie im mit Filtermedium gefüllten Zustand im Behälter 1 schwimmen. In Frage kommen vor allem EPS, EPP, EPE, PP-E,PE-Schaum, PVC-E, PS-E, PET-Schaum, Polyurethanschaum (PUR), NBR, Phenoplast-Schaum und Schaum aus diversen Biopolymeren. Jede Halbschale 9 weist im Wesentlichen einen kreisringförmigen Rand 9b und einen Boden 9a auf Ein rohrförmiges Steckelement 9c in der Mitte der Halbschale 9 gestattet ein Positionieren der Filterkartuschen 4 auf dem Rohrabschnitt 8a. Der Boden 9a ist mit einer Vielzahl von Löchern 10 versehen, die einen Durchtritt des zu filternden Wassers gestatten. Die Innenseite des Bodens 9a ist mit einer Anzahl von Noppen 11, welche eine Wasserverteilung unter dem Filtermaterial unterstützen, versehen. Der Boden 9a ist ferner gegenüber dem Rand 9b etwas nach innen versetzt, wie es aus Fig. 4 ersichtlich ist, und ist zur Erhöhung der Stabilität mit einer Anzahl von Stützstegen 12 versehen, deren Höhe dem Überstand des Randes 9b gegenüber dem Boden 9a entspricht. Bei der gezeigten Ausführungsform sind die Stützstege 12 konzentrisch zum Rand 9b angeordnet.

Im Inneren der Filterkartuschen 4 befindet sich Filtermaterial, welches als Trägermaterial für die Anzucht von Biofilm dient. Die beiden Halbschalen 9 werden nach dem Befüllen mit Filtermaterial zusammengefügt und miteinander fest verbunden, beispielsweise verklebt. Als Filtermaterial kommt vor allem Steinwolle in Frage, da sich mit Steinwolle gefüllte Halbschalen 9 problemlos zur Filterkartusche 4 zusammenfügen lassen. Alternativ können die Halbschalen 9 mit anderen Filtermaterialien, wie Blähton, Zeolithbruch und dergleichen befüllt und mit Steinwolle oder dergleichen bedeckt werden, um zwei Halbschalen 9 problemlos zusammenfügen zu können. Feines Filtermaterial, wie Steinwolle, ermöglicht es, bessere Filterleistungen zu erzielen, und kann solange verwendet werden, als eine gleichmäßige Anströmung der Oberfläche des Filtermaterials gewährleistet ist. Nachdem das Trägermaterial für den Biofilm in den Filterkartuschen 4 enthalten ist, welche regelmäßig und ohne großen Aufwand ausgetauscht werden können, ist auch die Verwendung von feinem Filtermaterial möglich. So kann bei einem kleinen Platzbedarf eine sehr hohe Filterleistung für eine definierte Reinigungskapazität erreicht werden. Die Filterkartuschen 4 können bereits fertig gefüllt über den Handel vertrieben und jederzeit ausgetauscht werden, wobei die verwendeten Filterkartuschen 4 entsorgt bzw. recycelt werden. Alternativ können die Halbschalen zur Befüllung durch den Kunden vertrieben werden.

Zum Austauschen der Filterkartuschen 4 im Behälter 1 wird der Wasserstand im Behälter 1 etwas abgesenkt, insbesondere durch Abpumpen bei verschlossenem Zuflussrohr 7. Dadurch wird der Deckel 3, welcher durch das im Behälter 1 befindliche Wasser gegen den umlaufenden Rand an der Behälteroberseite gedrückt wird, frei gegeben und kann entfernt werden. Nun wird Wasser schrittweise derart zugeführt, dass die einzelnen Filterkartuschen 4 Stück für Stück mühelos aus dem Behälter 1 herausgehoben werden können. Nach dem jeweiligen Positionieren einer neuen Filterkartusche 4 wird das Wasser im Behälter schrittweise abgelassen. Sind alle Filterkartuschen 4 eingebracht wird der Deckel 3 positioniert und der Behälter 1 mit Wasser befüllt. Der Deckel 3 schließt sich bei der vollständigen Flutung durch die aufschwimmenden Kartuschen 4, ein Werkzeug, Schrauben und dergleichen sind nicht erforderlich.

Eine erfindungsgemäß ausgeführte Filtervorrichtung kann sowohl extern - außerhalb von Schwimmteichen - als auch in Schwimmteichen, Schwimmbecken und dergleichen eingebaut werden. Je nach der konstruktiven Ausführung des Behälters kann auch vorgesehen sein, die Filterkartuschen bzw. Stapel von Filterkartuschen nebeneinander zu positionieren. Der Filterbehälter kann von unten nach oben oder von oben nach unten durchströmt werden.

Anstelle eines von innen selbst abdichtenden Deckels kann auch ein Deckel von oben aufgesetzt werden und beispielsweise mittels einer zentralen Schraube oder mittels Flanschen und dergleichen nach unten gedrückt werden.

### Bezugsziffernliste

1 ..... Behälter
1a ... Stützelement
2 ..... Öffnung
2a ... Rand
3 ..... Deckel
3a ... Griffelement
4 ..... Filterkartusche
5 ..... Anschluss
6 ..... Anschluss
7 ..... Anschluss
8 ..... Rohr
8a ... Rohrabschnitt
8b ... Rohrabschnitt
9 ..... Halbschale
9a ... Boden
9b ... Rand
9c ... Steckelement
10 ... Loch
11 ... Noppe
12 ... Stützsteg

## Patentansprüche

1. Filtervorrichtung, insbesondere zur biologischen Aufbereitung von Badewasser aus Schwimmteichen, Schwimmbecken und dergleichen, mit einem feststehenden Behälter (1), in welchem auswechselbare Filterkartuschen (4), die ein zur Bildung von Biofilm geeignetes Filtermedium enthalten, positioniert sind und von dem zu reinigenden Wasser durchströmt werden,
**dadurch gekennzeichnet,**
**dass** die Filterkartuschen (4) aus einem Material bestehen, welches eine geringere Dichte als Wasser aufweist, und derart ausgeführt sind, dass sie im mit Filtermedium gefüllten Zustand im Behälter (1) schwimmend positioniert sind.

2. Filtervorrichtung nach Anspruch 1, **dadurch gekennzeichnet, dass** die Filterkartuschen (4) aus einem wasserbeständigen, geschlossenzelligen Hartschaum bestehen.

3. Filtervorrichtung nach Anspruch 2, **dadurch gekennzeichnet, dass** die Filterkartuschen (4) aus EPS, EPP, EPE, PP-E, PE-Schaum, PVC-E-, PS-E-, PET-Schaum, Polyurethanschaum (PUR), NBR, Phenoplast-Schaum oder Schaum aus diversen Biopolymeren bestehen.

4. Filtervorrichtung nach einem der Ansprüche 1 bis 3, **dadurch gekennzeichnet, dass** jede Filterkartusche (4) aus zwei insbesondere übereinstimmend ausgeführten, miteinander fest verbundenen Hartschaum-Halbschalen (9) besteht.

5. Filtervorrichtung nach einem der Ansprüche 1 bis 4, **dadurch gekennzeichnet, dass** die Filterkartuschen (4) als Filtermedium Steinwolle, Sand, Kies, Kunststoffkörper, Schwämme, Zeolithbruch, Eisenoxid und dergleichen enthalten.

6. Filtervorrichtung nach einem der Ansprüche 1 bis 5, **dadurch gekennzeichnet, dass** im Behälter mehrere übereinstimmend ausgeführte Filterkartuschen (4) übereinander gestapelt sind.

7. Filtervorrichtung nach Anspruch 6, **dadurch gekennzeichnet, dass** die Filterkartuschen (4) mittels mittiger Öffnungen übereinander auf einem Rohrabschnitt (8a) eines Rohres (8) zur Ableitung des gefilterten Wassers positioniert sind.

8. Filtervorrichtung nach Anspruch 1, **dadurch gekennzeichnet, dass** der Behälter (1) mit einem von Inneren des Behälters (1) abdichtenden Deckel (3) verschließbar ist.

9. Filterkartusche (4) für eine Filtervorrichtung zur biologischen Aufbereitung von Badewasser aus Schwimmteichen, Schwimmbecken und dergleichen, welche Kartusche mit einem Filtermedium gefüllt und von Wasser durchströmbar ist,
**dadurch gekennzeichnet,**
**dass** die Filterkartusche (4) aus einem Material besteht, welches eine geringere Dichte als Wasser aufweist und aus zwei miteinander verbundene Halbschalen (9) zusammengesetzt ist, welche den das Filtermedium aufnehmenden Raum umschließen.

10. Filterkartusche (4) nach Anspruch 9, **dadurch gekennzeichnet, dass** sie aus einem wasserbeständigen, geschlossenzelligen Hartschaum besteht.

11. Filterkartusche (4) nach Anspruch 9 oder 10, **dadurch gekennzeichnet, dass** sie aus EPS, EPP, EPE, PP-E, PE-Schaum, PVC-E-, PS-E-, PET-Schaum, Polyurethanschaum (PUR), NBR, Phenoplast-Schaum oder Schaum aus diversen Biopolymeren besteht.

12. Filterkartusche nach einem der Ansprüche 9 bis 11, **dadurch gekennzeichnet, dass** die Halbschalen (9) flachzylindrisch und insbesondere übereinstimmend ausgeführt sind.

13. Filterkartusche nach einem der Ansprüche 9 bis 12, **dadurch gekennzeichnet, dass** die Halbschalen (9) mittig mit integrierten rohrartigen Steckelementen (9c) versehen sind.

14. Filterkartusche nach einem der Ansprüche 9 bis 13, **dadurch gekennzeichnet, dass** sie als Filtermedium Steinwolle enthält.

15. Filterkartusche nach einem der Ansprüche 9 bis 13, **dadurch gekennzeichnet, dass** sie als Filtermedium Sand, Kies, Kunststoffkörper, Schwämme, Zeolithbruch, Eisenoxid und dergleichen enthält.
